# FASCICULE DE BREVET EUROPEEN

(11) **EP 3 430 706 B1**
(45) Date de publication et mention de la délivrance du brevet: **24.02.2021**
(21) Numéro de dépôt: 17713710.6
(22) Date de dépôt: 09.03.2017
(51) Int. Cl.: H02K 1/27

(54) **ROTOR POUR MOTEUR OU GÉNÉRATRICE ÉLECTROMAGNÉTIQUE À FLUX AXIAL À AIMANTS SEMI-ENTERRÉS AVEC DES MOYENS DE MAINTIEN AXIAL**
ROTOR FÜR ELEKTROMAGNETISCHEN AXIALFLUSSMOTOR ODER -GENERATOR MIT HALBEINGEBETTETEN MAGNETEN UND AXIALEN HALTEMITTELN
ROTOR FOR AXIAL FLUX ELECTROMAGNETIC MOTOR OR GENERATOR WITH SEMI-EMBEDDED MAGNETS AND AXIAL HOLDING MEANS

(30) Priorité: 14.03.2016 FR 1600419
(43) Date de publication de la demande: 23.01.2019
(73) Titulaire: Whylot SAS, 46100 Cambes (FR)
(72) Inventeur: TIEGNA, Huguette, 46100 Figeac (FR); MAYEUR, Loïc, 12300 Saint-Sentin (FR); RAVAUD, Romain, 46240 Labastide Murat (FR)
(86) Numéro de dépôt international: PCT/FR2017/000047
(87) Numéro de publication internationale: WO 2017/158247

(56) Documents cités:
- EP-A2- 2 632 027
- WO-A1-2010/092774
- CN-U- 204 578 231
- JP-A- 2003 092 865
- JP-A- 2006 014 399
- JP-A- 2008 199 811
- JP-A- 2015 061 394
- JP-B2- 5 277 514
- US-A1- 2014 292 117

## Description

La présente invention concerne un rotor pour moteur ou génératrice électromagnétique à flux axial tournant à des vitesses de rotation élevées et un moteur ou génératrice électromagnétique équipé d'un tel rotor.

La présente invention trouve une application avantageuse mais non limitative pour un moteur électrique délivrant une forte puissance avec une vitesse de rotation du rotor élevée ce qui est obtenu par les caractéristiques spécifiques du rotor selon la présente invention. Un tel moteur peut être utilisé par exemple comme moteur électrique dans un véhicule automobile totalement électrique ou hybride.

Avantageusement mais non limitativement, le moteur ou la génératrice électromagnétique peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir non seulement un système compact rendu possible par la réduction de la masse et de l'encombrement du moteur axial pour un rendement optimal, mais également une très bonne tenue mécanique de la partie tournante, c'est-à-dire le rotor, afin d'améliorer la fiabilité du système.

Il est connu un rotor à aimants semi-enterrés destiné à une machine électromagnétique à flux axial. Un tel rotor comporte un corps sous forme d'un disque présentant deux faces circulaires reliées par une épaisseur, le disque étant délimité entre une périphérie externe et une périphérie interne délimitant un évidement pour un arbre de rotation.

Au moins deux aimants permanents sont appliqués contre au moins une des deux faces circulaires du corps dite face de support. Pour un rotor mono-entrefer destiné à être associé à un stator une seule face circulaire du corps porte des aimants tandis que pour un rotor à deux entrefers avec un stator respectif, ce sont les deux faces qui portent des aimants.

Les aimants sont chacun maintenus sur la face ou leur face respective par des moyens de maintien, un intervalle étant laissé entre lesdits au moins deux aimants sur une même face.

Pour le stator ou chaque stator, ceux-ci portent des éléments de bobinage comprenant une dent portant une bobine, la dent étant encadrée sur chacun de ses côtés par une encoche, un fil métallique bon conducteur étant enroulé sur la dent pour former la bobine.

Quand la série ou les séries de bobinages sont alimentées électriquement, le rotor qui est solidarisé à l'arbre de sortie du moteur est soumis à un couple résultant du champ magnétique, le flux magnétique créé étant un flux axial pour une machine électrique à flux axial.

Pour un moteur à forte puissance, le rotor tourne à des vitesses de rotation élevées. Le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées.

Le document JP-A-2008/199811 décrit un rotor à aimants. Dans ce document, les aimants ne sont pas semi-enterrés mais complètement encadrés par des éléments comme une plaque magnétique et un élément de matériau magnétique. Il s'ensuit que, dans ce document, les aimants sont entièrement logés dans une cavité et ne font pas saillie d'un côté de cette cavité comme le feraient des aimants semi-enterrés.

Le document US-A-2014/292117 décrit un rotor à aimants avec au moins deux aimants permanents appliqués contre au moins une de deux faces circulaires du corps dite face de support en étant chacun maintenus sur ladite face par des moyens de maintien. Dans ce document, les aimants ne sont pas semi-enterrés et les moyens de maintien n'ont pas d'effet de maintien axial sur les aimants mais les encadrent simplement.

Le document EP-A-2 632 027 décrit un rotor à aimants avec au moins deux aimants permanents appliqués contre au moins une de deux faces circulaires du corps dite face de support en étant chacun maintenus sur ladite face par des moyens de maintien. Dans ce document, les aimants ne sont pas semi-enterrés. Des moyens de maintien ont certes un effet de maintien axial sur les aimants de par les collerettes mais ces collerettes ne s'appliquent pas sur des parties faisant saillie des aimants.

Le document JP2006014399 divulgue un rotor destiné à un moteur ou une génératrice électromagnétique à flux axial, le rotor (2) comportant un corps (8) avec un disque présentant deux faces circulaires reliées par une épaisseur, le disque étant délimité entre une périphérie externe et une périphérie interne, la périphérie interne délimitant un évidement pour un arbre de rotation, au moins deux aimants (9) permanents semi-enterrés étant appliqués contre au moins une des deux faces circulaires du corps (8) dite face de support en étant chacun maintenus sur ladite face, un intervalle étant laissé entre lesdits au moins deux aimants (9) (les références sont celles de ce document voir figures).

Les aimants semi-enterrés font saillie de leur logement respectif. Les aimants semi-enterrés présentent des avantages notoires notamment en ce qui concerne la minimisation des pertes par courants de Foucault dans le rotor mais aussi des avantages mécaniques, par exemple pour retenir un minimum d'épaisseur de colle ou de soudure sous les aimants et sur les parois d'insertion quand ces éléments sont soudés ou collés.

Par contre, ces aimants semi-enterrés présentent le grand désavantage de ne pas être suffisamment maintenus en direction axiale du rotor, étant donné qu'ils ne sont pas recouverts par un élément, notamment un élément magnétique. Ce grand désavantage freine l'utilisation des aimants semi-enterrés.

Le problème à la base de la présente invention est de concevoir un rotor pour une machine électromagnétique à flux axial qui puisse maintenir le ou les aimants permanents dans leur logement respectif qu'ils supportent de manière efficace en évitant aux aimants de se détacher du rotor, les aimants étant des aimants semi-enterrés, c'est-à-dire dépassant de leur logement respectif.

A cet effet, on prévoit selon l'invention un rotor selon la revendication 1. Différentes modes de réalisation sont définis dans les revendications dépendantes. Certaines des revendications dépendantes définissent un moyen de maintien axial s'étendant circulairement tout autour de la périphérie interne et/ou externe du corps en formant une couronne recouvrant localement et directement au moins un desdits au moins deux aimants semi-enterrés.

L'effet technique obtenu est une meilleure tenue des aimants semi-enterrés dans le rotor en direction axiale qui peut être complétée par des moyens de maintien radial.

Le présent rotor à aimants semi-enterrés est conçu de façon à réduire les pertes dans le rotor avec des moyens de maintien permettant de retenir les aimants semi-enterrés et de pallier ainsi l'effet d'une force axiale et, le cas échéant, d'une force centrifuge apparaissant à très haute vitesse.

Comparé à l'état de la technique le plus proche illustré par le document JP-A-2008/199811, le rotor selon l'invention peut convenir à des aimants semi-enterrés. Pour conserver tous les bénéfices procurés par l'emploi d'aimants semi-enterrés, il convient que les aimants soient recouverts le moins possible par des moyens de maintien.

La présente invention donne une solution qui convient à toute forme de disposition d'aimants semi-enterrés sur le rotor. Localement veut dire que le recouvrement des aimants semi-enterrés est limité ce qui n'était pas le cas dans le document JP-A-2008/199811 où tous les aimants étaient entièrement recouverts. Directement veut dire que les moyens de maintien sont effectifs sur les aimants même et non pas par l'intermédiaire d'une pièce intermédiaire qui ferait perdre tous les avantages que procurent les aimants semi-enterrés.

Les moyens latéraux de maintien axial agissent directement sur les aimants semi-enterrés. Il s'ensuit un maintien individuel de chaque aimant sur le rotor par au moins un moyen latéral de maintien axial qui lui est dédié.

Il est à garder à l'esprit qu'une couronne formant à la fois moyen de maintien radial et moyen de maintien axial placée à la périphérie du corps du rotor n'est pas assimilable à une frette. En effet, une frette est toujours associée à une compensation de la force centrifuge et à une fonction de compression en étant une pièce indépendante du corps du rotor et disposée à la périphérie externe de ce corps. Une frette n'a aucune action sur un maintien axial des aimants semi-enterrés.

Inversement le moyen de maintien axial sous forme de couronne fait partie du corps. Ce moyen de maintien axial sous forme de couronne permet de retenir les aimants semi-enterrés axialement mais les comprime peu ou pas. L'élément de maintien axial sous forme de couronne fait partie du corps à l'inverse d'une frette. Cet élément de maintien axial sous forme de couronne est disposé sur le corps avant que les aimants semi-enterrés ne soient solidarisés au corps, l'insertion des aimants se faisant radialement en partant de la portion centrale du corps délimitée par la périphérie interne qui peut aussi porter un élément de maintien axial.

Le moyen de maintien axial concentrique au rotor n'est quant à lui ni suggéré ni rendu évident par l'état de la technique, de tels moyens de maintien étant sous la forme de frette et exerçant uniquement un maintien radial et non axial. Une frette déjà présente pour l'absorption des forces centrifuges peut servir de plus comme butée à l'aimant ou aux aimants semi-enterrés contre un mouvement radial des aimants semi-enterrés mais pas comme élément de maintien axial.

De manière facultative, l'invention comprend en outre au moins l'une quelconque des caractéristiques suivantes :
- quand le moyen de maintien axial s'étendant circulairement tout autour de la périphérie interne et/ou externe du corps en formant une couronne est présent, ledit au moins un moyen de maintien axial est associé à un moyen de maintien radial en étant solidarisé au corps. On obtient ainsi un maintien radial et axial procuré avantageusement par le même élément de maintien, ce qui est avantageux en coût. Ceci permet de compléter l'action des moyens latéraux de maintien axial.
- le moyen de maintien axial est sous forme d'une collerette autour de la périphérie de la couronne, la collerette présentant des portions biseautées en vis-à-vis desdits au moins deux aimants semi-enterrés,
- ledit au moins un moyen latéral de maintien axial fait partie intégrante du corps du rotor ou est une pièce rapportée solidaire du corps du rotor.
- ledit au moins un moyen latéral de maintien axial est usiné dans la masse du corps du rotor ou collé, soudé, vissé ou serti au corps du rotor. Ceci renforce la solidité du rotor.
- ledit au moins un moyen latéral de maintien axial comprend une ou des branches, la ou chaque branche étant solidarisée avec le corps et séparant lesdits au moins deux aimants semi-enterrés dans un intervalle respectif, la ou chaque branche comprenant au moins un tenon s'étendant en saillie ortho-radiale de la branche et recouvrant au moins une portion d'une face d'au moins un desdits au moins deux aimants semi-enterrés se trouvant la plus éloignée de et opposée à la face de support du corps, ledit au moins un tenon faisant butée contre l'aimant en empêchant un mouvement d'éloignement de l'aimant associé en éloignement axial du corps. Ainsi, les moyens latéraux de maintien axial sont logés entre les aimants semi-enterrés dans des intervalles pouvant avoir été laissés vides entre les aimants semi-enterrés et recevant ces moyens latéraux de maintien axial. Le tenon ne recouvre que la partie suffisante de l'aimant pour garantir son maintien.
- chacun desdits au moins deux aimants semi-enterrés est associé à au moins deux tenons.
- chaque tenon s'étend latéralement des deux côtés de la branche associée, une première portion latérale du tenon recouvrant au moins une portion d'un aimant desdits au moins deux aimants semi-enterrés et une seconde portion latérale du tenon recouvrant au moins une portion de l'autre aimant.
- quand le rotor comprend un moyen de maintien radial externe s'étendant tout autour de la périphérie externe du corps, le moyen de maintien radial externe est relié respectivement à chaque branche, des portions en arc de cercle du moyen de maintien radial externe formant butée contre un déplacement radial et axial d'un desdits au moins deux aimants semi-enterrés.
- quand le rotor ne comprend pas un moyen de maintien radial externe s'étendant tout autour de la périphérie externe du corps, le rotor est entouré par une frette circulaire.
- le rotor comprend un élément de maintien radial interne, des portions en arc de cercle du moyen de maintien radial interne formant butée contre un déplacement axial d'un desdits au moins deux aimants semi-enterrés.
- quand le rotor comprend un moyen de maintien radial interne, le moyen de maintien radial interne au corps s'étend circulairement tout autour de la périphérie interne du corps et est solidarisé au corps.
- quand le corps comprend une ou des branches séparant lesdits au moins deux aimants semi-enterrés dans un intervalle respectif et un moyen de maintien radial interne et/ou externe, le moyen de maintien radial interne et/ou externe est solidarisé avec la ou chaque branche.
- quand le corps comprend une ou des branches séparant lesdits au moins deux aimants semi-enterrés dans un intervalle respectif, le moyen de maintien radial interne est solidarisé avec la ou chaque branche.
- lesdits au moins deux aimants semi-enterrés sont de forme différente et/ou composés de plusieurs pièces formant des pôles magnétiques ou font partie d'une structure monopièce présentant plusieurs pôles magnétiques. Cette forme de réalisation est la plus voisine de celle de l'état de la technique le plus proche avec une pièce moulée portant des aimants semi-enterrés.

Cependant, même dans cette forme de réalisation, les moyens latéraux de maintien axial de la présente invention présentent des tenons qui recouvrent partiellement et directement les aimants de la structure alors que dans l'état de la technique le plus proche illustré par JP-A-2008/199811, il était utilisé des éléments qui s'inséraient dans des portions d'une pièce recouvrant les aimants.

Dans une telle disposition divulguée par cet état de la technique, il était toujours possible qu'un aimant puisse se décoller car non directement maintenu, ce qui est évité dans le cadre de la présente invention du fait d'un tenon spécifiquement dédié à un aimant. De plus en appliquant les caractéristiques divulguées dans JP-A-2008/199811, à des aimants semi-enterrés, tous les bénéfices des aimants semi-enterrés sont annihilés.
- lesdits au moins deux aimants semi-enterrés sont sous la forme de tuiles quadrangulaires avec deux côtés desdits au moins deux aimants semi-enterrés s'étendant radialement et deux côtés desdits au moins deux aimants semi-enterrés s'étendant en arcs de cercle concentriques au centre du disque formé par le corps.
- les deux faces circulaires du corps du rotor comprennent chacune au moins deux aimants semi-enterrés.
- au moins une structure monopièce circulaire est formée desdits au moins deux aimants semi-enterrés, la structure monopièce dans le cas d'une unique structure monopièce formant une couronne circulaire sur une face circulaire du corps ou deux structures monopièces dans le cas de plusieurs structures monopièces formant deux couronnes circulaires concentriques d'aimants semi-enterrés avec une couronne circulaire sur chacune des faces circulaires du corps, les deux structures monopièces étant espacées par un élément de séparation faisant partie du corps du rotor, lesdits au moins deux aimants semi-enterrés de la structure monopièce ou des deux structures monopièces en forme de couronnes étant maintenu par un moyen latéral de maintien axial ou par un moyen de maintien axial formant couronne, le cas échéant avec un moyen de maintien radial formant couronne.

L'invention concerne aussi un moteur ou génératrice à flux axial comportant un ou plusieurs entrefers séparant respectivement un ou des rotors et un ou des stators portant un bobinage, caractérisé en ce que le moteur ou la génératrice comprend au moins un tel rotor.

Avantageusement, le moteur ou la génératrice comprend au moins deux stators connectés en série ou en parallèle.

Avantageusement, lesdits au moins deux stators sont décalés d'un angle alpha l'un par rapport à l'autre.

D'autres caractéristiques, buts et avantages de la présente invention apparaîtront à la lecture de la description détaillée qui va suivre et au regard des dessins annexés donnés à titre d'exemples non limitatifs et sur lesquels :

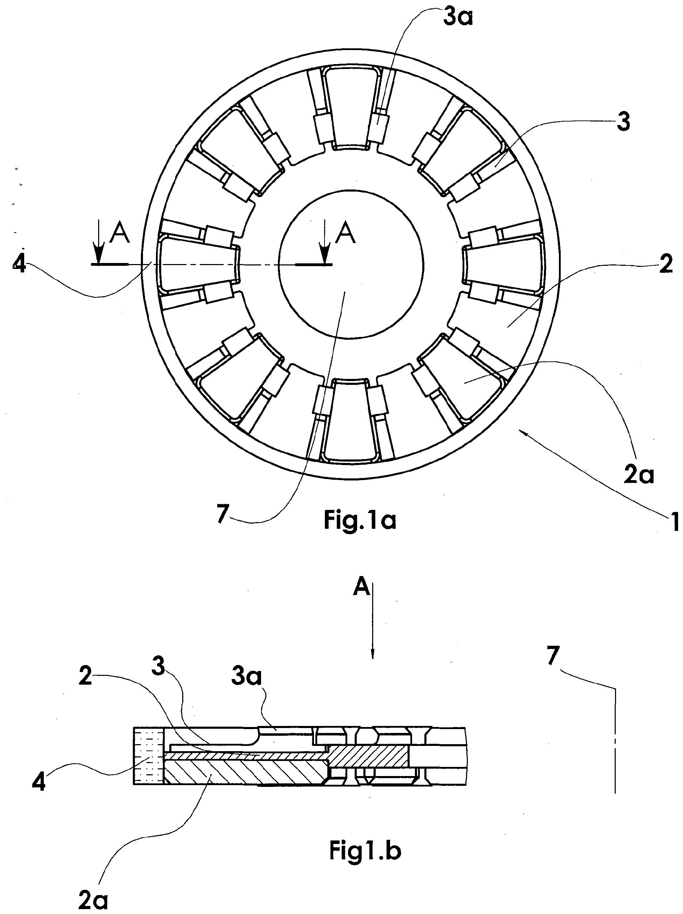

- la figure 1a est une représentation schématique d'une vue d'une face d'un rotor destiné à une machine électrique à flux axial selon une première forme de réalisation de la présente invention, des moyens latéraux de maintien axial des aimants semi-enterrés du rotor étant montrés à cette figure, la figure 1b étant une coupe radiale de la figure 1a avec des aimants sur chaque face du rotor, les aimants d'une face ayant été enlevés pour laisser apparaître les éléments de maintien,

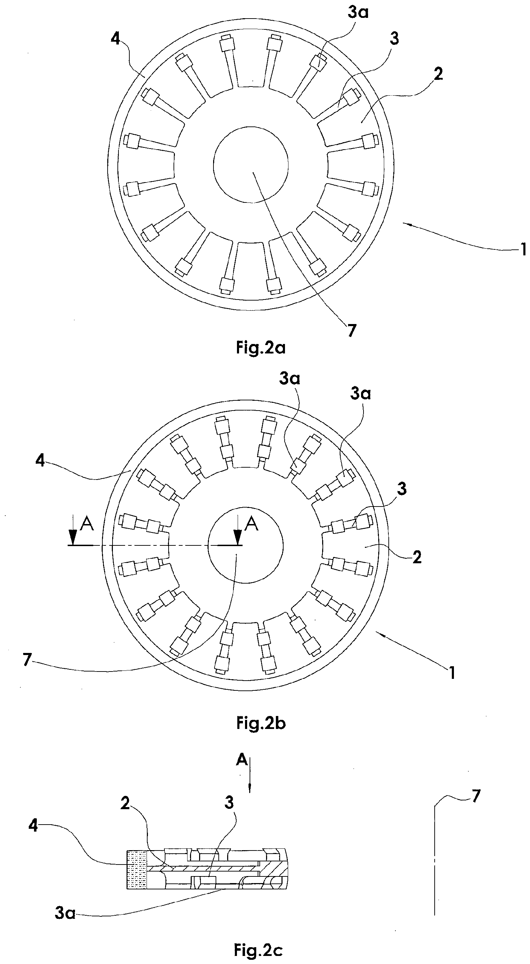

- les figures 2a et 2b sont des représentations schématiques d'une vue d'une face d'un rotor destiné à une machine électrique à flux axial selon des deuxième et troisième formes de réalisation de la présente invention, des moyens latéraux de maintien axial des aimants semi-enterrés du rotor étant montrés à ces figures, le corps du rotor portant le ou les aimants semi-enterrés et étant entouré d'une frette à ces figures, la figure 2c étant une coupe radiale de la figure 2a ceci sans les aimants pour laisser apparaître les éléments de maintien,

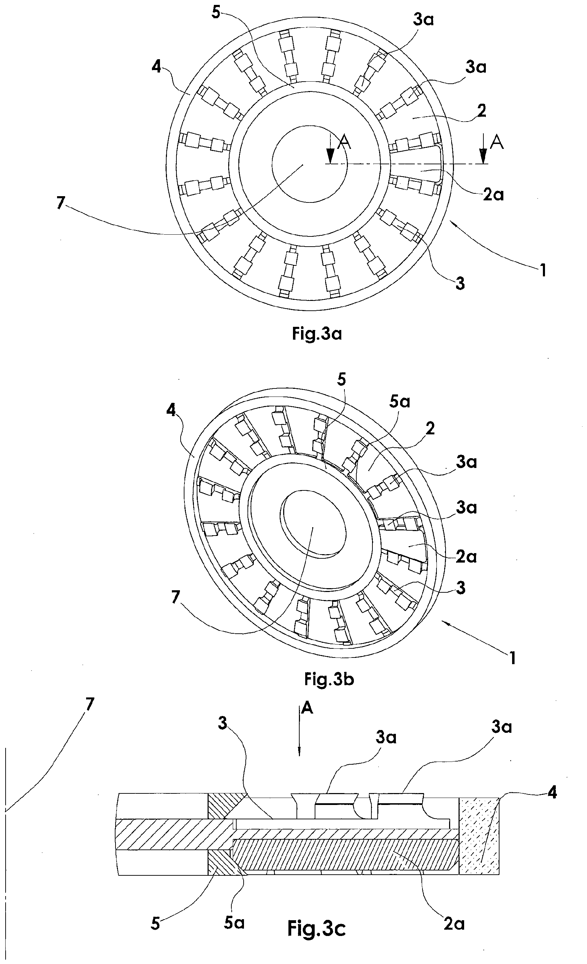

- les figures 3a et 3b sont des représentations schématiques d'une vue d'une face d'un rotor destiné à une machine électrique à flux axial selon des quatrième et cinquième formes de réalisation de la présente invention, deux moyens latéraux de maintien axial des aimants semi-enterrés du rotor entre deux aimants semi-enterrés étant montrés à ces figures, le corps du rotor portant le ou les aimants semi-enterrés et étant entouré d'une frette et un moyen concentrique au rotor de maintien axial état montrés à ces figures, la figure 3c étant une coupe radiale de la figure 3a avec des aimants sur chaque face radiale du rotor, les aimants d'une face ayant été enlevés pour laisser apparaître les éléments de maintien,

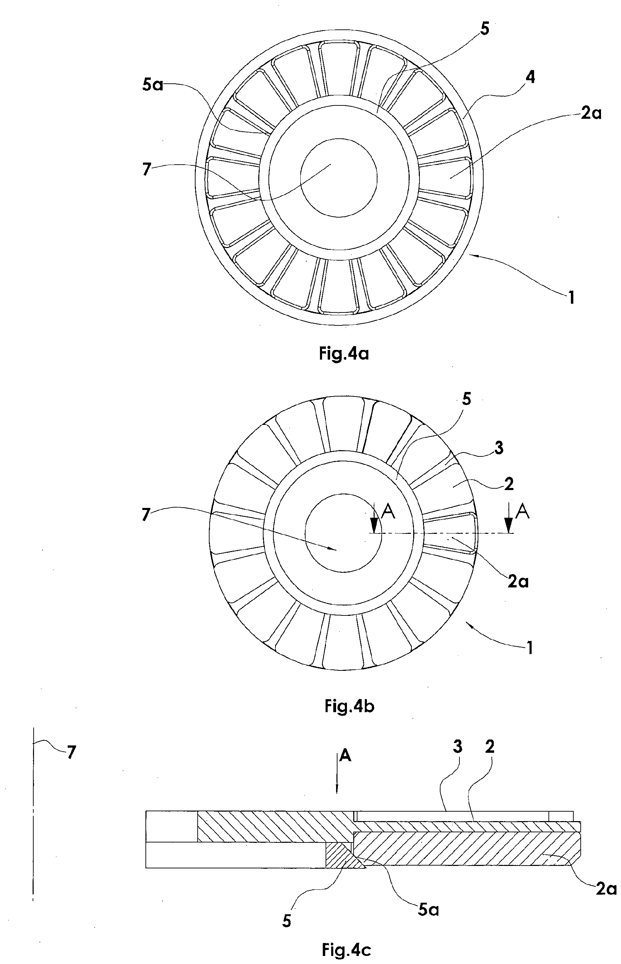

- les figures 4a et 4b sont des représentations schématiques d'une vue d'une face d'un rotor destiné à une machine électrique à flux axial selon des sixième et septième formes de réalisation de la présente invention, un moyen de maintien axial concentrique au rotor état montré à ces figures, la figure 4c étant une coupe radiale de la figure 4a avec des aimants sur chaque face du rotor,

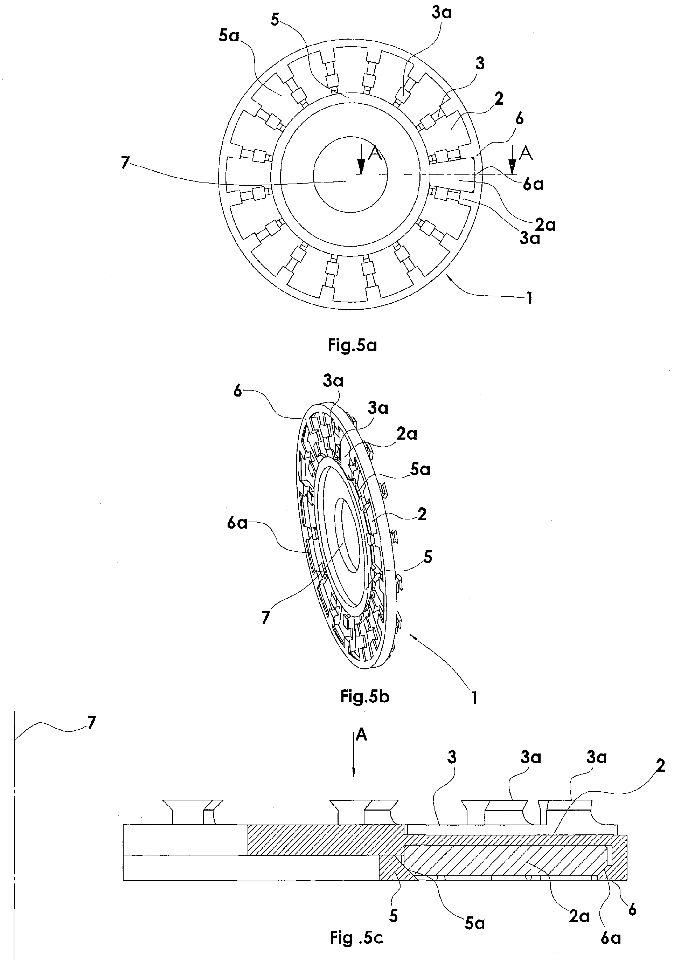

- les figures 5a et 5b sont des représentations schématiques d'une vue d'une face d'un rotor destiné à une machine électrique à flux axial selon une huitième forme de réalisation de la présente invention, deux tenons faisant partie de moyens latéraux de maintien axial des aimants semi-enterrés du rotor entre deux aimants semi-enterrés étant montrés à ces figures, le corps du rotor portant le ou les aimants semi-enterrés et étant entouré d'un moyen de maintien radial concentrique au rotor étant montrés à ces figures, , la figure 5c étant une coupe radiale de la figure 5a avec des aimants sur chaque face du rotor,

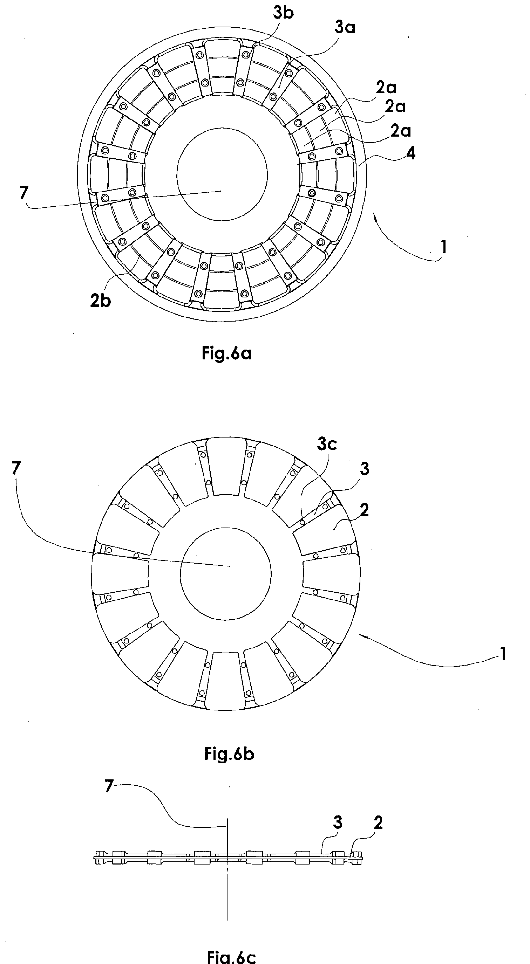

- les figures 6a et 6b sont des représentations schématiques d'une vue d'une face d'un rotor destiné à une machine électrique à flux axial selon des neuvième et dixième formes de réalisation de la présente invention, deux moyens latéraux de maintien axial des aimants semi-enterrés du rotor entre deux aimants semi-enterrés étant montrés à ces figures, ces moyens latéraux étant amovibles du corps, le corps du rotor portant le ou les aimants semi-enterrés et étant entouré d'une frette à la figure 6a, la figure 6c étant une vue de la tranche extérieure du rotor,

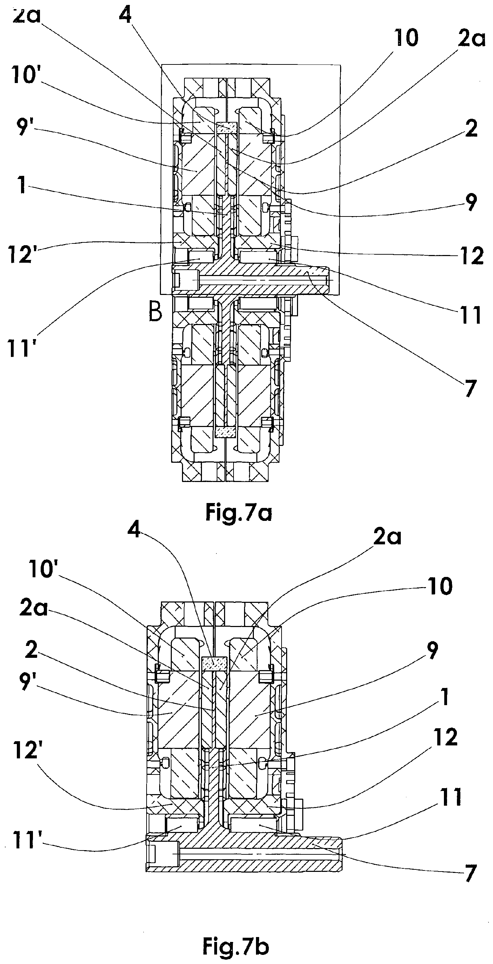

- les figures 7a et 7b sont des représentations schématiques d'une vue en coupe longitudinale d'un moteur électromagnétique comprenant deux rotors et un stator, les rotors étant conformes à un des modes de réalisation d'un rotor précédemment décrits, la figure 7b étant agrandie par rapport à la figure 7a.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

En se référant à toutes les figures, la présente invention concerne un rotor 1 à aimants semi-enterrés destiné à une machine électromagnétique à flux axial. Les aimants sont semi-insérés dans le but de minimiser les pertes par courants de Foucault dans le rotor et aussi pour des besoins mécaniques, par exemple pour retenir un minimum épaisseur de colle ou de soudure sous les aimants semi-enterrés et sur les parois d'insertion quand ces éléments sont soudés ou collés.

Le rotor 1 comporte un corps 2 sous forme d'un disque présentant deux faces circulaires reliées par une épaisseur, le disque étant délimité entre une périphérie externe et une périphérie interne. La périphérie interne délimite un évidement pour un arbre de rotation 7.

Au moins deux aimants semi-enterrés 2a permanents sont appliqués contre au moins une des deux faces circulaires du corps 2 dite face de support en étant chacun maintenus sur ladite face par des moyens de maintien 3a, 5, 5a, 6, 6a, un intervalle étant laissé entre lesdits au moins deux aimants semi-enterrés 2a. Les aimants semi-enterrés peuvent faire partie d'une structure concentrique en lui étant intégrés ou peuvent être unitaires.

Selon l'invention, les moyens de maintien 3, 3a, 5a, 6a sont sous la forme d'au moins un moyen latéral de maintien axial 3, 3a. Dans ce cas, le moyen latéral de maintien axial 3, 3a est logé dans l'intervalle en comprenant au moins un tenon 3a recouvrant localement et directement au moins un desdits au moins deux aimants semi-enterrés 2a. Ceci est montré notamment aux figures 1a, 2a, 2b, 3a, 3b, 5a et 5b, 6a et 6b.

Toujours selon l'invention, les moyens de maintien 3, 3a, 5a, 6a sont sous la forme d'un moyen de maintien axial 5a, 6a s'étendant circulairement tout autour de la périphérie interne et/ou externe du corps en formant une couronne, recouvrant localement et directement au moins un desdits au moins deux aimants semi-enterrés. Ceci est montré aux figures 4a, 4b et 5b.

Aux figures 1b et 2c, un moyen de maintien axial 3a est montré sans la présence de l'aimant associé 2a. Aux figures 3c 4c, un moyen de maintien axial 5 des aimants s'étendant circulairement tout autour de la périphérie interne est montré. Dans ce mode de configuration du moyen de maintien axial 5, celui-ci porte une portion biseautée 5a en appui contre une portion elle-même biseautée de l'aimant 2a.

A la figure 5c, un moyen de maintien axial 5 des aimants 2a est montré s'étendant circulairement tout autour de la périphérie interne avec une portion biseautée 5a en appui contre une portion elle-même biseautée de l'aimant 2a. Ce moyen de maintien axial 5 desdits au moins deux aimants semi-enterrés 2a coopère pour chaque aimant avec un moyen de maintien axial 6 s'étendant circulairement tout autour de la périphérie externe du corps en formant une couronne. Dans ce mode de configuration du moyen de maintien axial 6, celui-ci porte une portion biseautée 6a en appui contre une portion elle-même biseautée d'un aimant semi-enterré 2a, ceci vers la périphérie externe du rotor.

Ces portions biseautées 5a, 6a de moyens de maintien axial 5, 6 peuvent former une collerette autour de la périphérie interne ou externe de la couronne, les portions biseautées 5a, 6a étant en vis-à-vis desdits au moins deux aimants semi-enterrés 2a.

A la figure 6c, des moyens de maintien latéraux 3 des aimants 2a sont montrés.

Les moyens de maintien latéraux 3, 3a peuvent être associées avec des moyens de maintien axial 5a, 6a sous forme d'une couronne s'étendant circulairement sur une des périphéries ou sur les deux périphéries. Selon l'invention, les moyens de maintien latéraux 3, 3a sont présents sans que les moyens de maintien axial 5a, 6a sous forme d'une ou de deux couronnes concentriques au corps 2 du rotor 1 soient présents. L'inverse, qui est que les moyens de maintien axial 5a, 6a sous forme d'une couronne sont présents sans que les moyens de maintien axial 3, 3a soient présents, ne fait pas partie de l'invention.

Quand un ou des moyens de maintien axial 5a, 6a s'étendant circulairement tout autour de la périphérie interne et/ou externe du corps 2 en formant une couronne sont présents, ce qui n'est pas toujours le cas, au moins un moyen de maintien axial 5a, 6a peut être associé à un moyen de maintien radial 5, 6 en étant solidarisé au corps 2.

Ceci est montré notamment à la figure 3b. Dans ce cas, des portions 5a en arc de cercle du moyen de maintien radial interne 5 peuvent former butée contre un déplacement axial et/ou radial d'un desdits au moins deux aimants semi-enterrés 2a.

Ledit au moins un moyen latéral de maintien axial 3, 3a peut faire partie intégrante du corps 2 du rotor 1 et/ou peut être une pièce rapportée solidaire du corps du rotor 1. Ce moyen latéral de maintien axial 3, 3a peut être usiné dans la masse du corps 2 du rotor 1, collé, soudé, vissé ou serti au corps 2 du rotor 1.

Dans des formes de réalisation selon l'invention, ledit au moins un moyen latéral de maintien axial 3, 3a peut comprendre une ou des branches 3. La ou chaque branche 3 peut être solidarisée avec le corps 2 et séparer lesdits au moins deux aimants semi-enterrés 2a dans un intervalle respectif.

La ou chaque branche 3 peut comprendre au moins un tenon 3a s'étendant en saillie ortho-radiale de la branche 3 et recouvrant au moins une portion d'une face d'au moins un desdits au moins deux aimants semi-enterrés 2a se trouvant la plus éloignée de et opposée à la face de support portée par le corps 2. Ceci concerne la face dudit au moins un aimant 2a qui est opposée à celle appliquée contre la face de support portée par le corps 2.

Dans cette position, ledit au moins un tenon 3a fait butée contre l'aimant 2a en empêchant un mouvement d'éloignement de l'aimant 2a associé en direction axiale du corps 2.

Pour un moyen de maintien axial 5a, 6a s'étendant circulairement tout autour de la périphérie interne et/ou externe du corps en formant une couronne, ce moyen de maintien axial 5a, 6a peut présenter une rainure dans laquelle pénètre un bord, soit le plus externe ou soit le plus interne, des aimants semi-enterrés 2a, cette rainure n'étant pas visible aux figures.

A la figure 1a, dans une première forme optionnelle de réalisation, chaque tenon 3a s'étend latéralement des deux côtés de la branche 3 associée. Une première portion latérale du tenon 3a recouvre au moins une portion d'un aimant desdits au moins deux aimants semi-enterrés 2a et une seconde portion latérale du tenon 3a recouvre au moins une portion de l'autre aimant.

A la figure 2a, dans une deuxième forme optionnelle de réalisation, chaque tenon 3a se trouve à une extrémité la plus externe au corps 2 de la branche 3. La branche 3 est adjacente à une frette 4 à son extrémité la plus externe.

A la figure 2b, dans une troisième forme optionnelle de réalisation, il y a deux tenons 3a par branche 3, les deux tenons 3a étant disposés successivement dans la longueur de la branche 3 avec l'extrémité libre de chaque branche 3 n'atteignant pas la frette 4.

Aux figures 3a et 3b, dans des quatrième et cinquième formes optionnelles de réalisation, il y a deux tenons 3a par branche 3, les branches 3 s'étendant entre, d'une part, un moyen de maintien axial et/ou radial 5, 5a circulaire tout autour de la périphérie interne en formant une couronne et, d'autre part, une frette 4 s'étendant à la périphérie externe du corps 2 du rotor 1.

Aux figures 4a et 4b, dans des sixième et septième formes optionnelles de réalisation, il n'y a pas de moyen latéral de maintien axial mais seulement un ou des moyens de maintien axial 5a, 6a circulaires s'étendant tout autour respectivement des périphéries interne ou externe du corps 2 en formant une couronne.

Aux figures 5a et 5b, dans une huitième forme optionnelle de réalisation, il est combiné des moyens latéraux de maintien axial avec branches 3 et tenons 3a avec deux moyens de maintien axial 5a, 6a circulaires s'étendant tout autour respectivement des périphéries interne ou externe du corps 2 en formant une couronne. Les branches 3 sont raccordées à une extrémité avec le moyen de maintien axial 5a interne et le moyen de maintien 6a externe, pour ce dernier par l'intermédiaire d'un élément de liaison 6b.

Aux figures 6a et 6b, dans des neuvième et dixième formes optionnelles de réalisation, les tenons 3a sont amovibles des branches 3 en étant fixés sur les branches 3 en au moins un point, avantageusement deux points et préférentiellement un point 3c vers une extrémité interne de la branche 3 et un point 3b vers une extrémité externe de la branche 3 par rapport au corps 2. Une frette 4 externe est prévue à la figure 6a.

La frette 4 en matériau composite peut être formée de fibres ou de bandes choisies parmi les fibres de verre, de carbone, de fibres polymères ou minérales.

Les fibres ou bandes consécutives peuvent être de nature ou de dimensions différentes. Il peut, par exemple, être mélangé des fibres de verre de composition différente, des fibres de plastique, par exemple en PEEK, en polyaramide ou des fibres de composite.

Quand le rotor 1 comprend un moyen de maintien radial externe 6 s'étendant tout autour de la périphérie externe du corps 2, le moyen de maintien radial externe 6 est relié respectivement à chaque branche 3, des portions en arc de cercle du moyen de maintien radial externe 6 formant butée contre un déplacement radial d'un desdits au moins deux aimants semi-enterrés 2a.

Il est avantageux de combiner ce moyen de maintien radial externe avec un moyen de maintien axial externe faisant avantageusement un même élément, un maintien axial étant alors assuré avec le maintien radial.

Comme précédemment mentionné, quand le rotor 1 ne comprend pas un moyen de maintien radial externe 6 s'étendant tout autour de la périphérie externe du corps 2 en formant une couronne, le rotor 1 est entouré par une frette 4 circulaire. Ceci n'est cependant pas obligatoire.

Quand le corps 2 comprend une ou des branches 3 séparant lesdits au moins deux aimants semi-enterrés 2a dans un intervalle respectif et un moyen de maintien radial interne 5a et/ou externe 6a formant couronne, le moyen de maintien radial interne 5a et ou externe 6a formant couronne peut être solidarisé avec la ou chaque branche 3.

Dans une forme de réalisation optionnelle, lesdits au moins deux aimants semi-enterrés 2a peuvent être de forme différente et/ou composés de plusieurs pièces formant des pôles magnétiques. En alternative, lesdits au moins deux aimants semi-enterrés 2a peuvent faire partie d'une structure monopièce présentant plusieurs pôles magnétiques.

Lesdits au moins deux aimants semi-enterrés 2a peuvent être sous la forme de tuiles quadrangulaires avec deux côtés desdits au moins deux aimants semi-enterrés 2a s'étendant radialement et deux côtés interne et externe desdits au moins deux aimants semi-enterrés 2a s'étendant en arcs de cercle concentriques au centre du disque formé par le corps 2.

Cependant, les aimants semi-enterrés 2a peuvent prendre diverses formes, par exemple en étant sous la forme de tuiles polygonales et pas seulement quadrangulaires, par exemple des tuiles triangulaires. Pour une tuile triangulaire, un sommet du triangle peut pointer avantageusement vers le centre du rotor 1.

Ledit au moins un aimant 2a peut être choisi parmi les aimants ferrites, les aimants à base de terres rares comme des aimants néodyme-fer-bore ou des aimants samarium cobalt, des aimants à base d'aluminium, de nickel et de cobalt, avec ou sans liant thermoplastique.

C'est sur des portions des côtés radiaux desdits au moins deux aimants semi-enterrés 2a que les tenons 3a, quand présents, font leur action, tandis que c'est sur les côtés interne et externe desdits au moins deux aimants semi-enterrés 2a que le ou les moyens de maintien axial sous forme d'une couronne ou de couronnes concentriques 5a, 6a au corps 2 du rotor 1, quand présents, exercent leur action.

Dans une forme préférentielle de réalisation de l'invention montrée aux figures 7a et 7b, le rotor 1 est destiné à un moteur ou une génératrice poly-entrefers en étant associé à deux stators l'intercalant entre eux. Dans ce cas, les deux faces circulaires du corps 2 du rotor 1 comprennent chacune au moins deux aimants semi-enterrés 2a.

Dans cette forme préférentielle de réalisation, lesdits au moins deux aimants semi-enterrés 2a comportent au moins deux couronnes concentriques d'aimants semi-enterrés espacées par un élément de séparation faisant partie du corps 2 du rotor 1. Chaque aimant des deux couronnes peut être maintenu par un moyen latéral de maintien axial 3, 3a et, le cas échéant par un moyen de maintien radial et axial 5, 5a, 6, 6a.

Sur le rotor 1, la série d'aimants semi-enterrés peut être formée par une structure monopièce comprenant lesdits au moins deux aimants semi-enterrés 2a. La structure monopièce forme une couronne circulaire sur une des faces circulaires du corps 2 du rotor 1.

En alternative, le corps 2 du rotor 1 peut porter deux structures monopièces formant deux couronnes circulaires concentriques d'aimants semi-enterrés espacées par un élément de séparation faisant partie du corps 2 du rotor 1. Chacune des deux structures monopièces est alors portée par une face circulaire respective du corps 2 du rotor 1.

Dans les deux cas, lesdits au moins deux aimants semi-enterrés 2a de la structure monopièce ou des deux structures monopièces en forme de couronnes peuvent être maintenus par un moyen latéral de maintien axial 3, 3a ou un moyen de maintien axial sous forme de couronne 5a, 6a, et le cas échéant un moyen de maintien radial 5, 6 sous forme de couronne.

L'invention concerne aussi un moteur ou une génératrice à flux axial comportant un ou plusieurs entrefers séparant respectivement un ou des rotors 1 et un ou des stators portant un bobinage, le moteur ou la génératrice comprenant au moins un tel rotor.

Le rotor 1 peut être associé à un seul stator ou peut être associé à deux stators en étant intercalé entre les deux stators. Quand il y a plus d'un stator, les stators peuvent être connectés en série ou en parallèle. Les stators peuvent être décalés d'un angle l'un par rapport à l'autre.

Les figures 7 et 7a montrent un rotor 1 comprenant un corps 2 avec deux séries d'aimants semi-enterrés 2a disposées en étant semi-enterrées chacune sur une face circulaire du corps 2 et en étant séparées l'une de l'autre par un élément de séparation faisant partie du corps 2. Le rotor 1 est entouré par deux stators, chaque stator formant un entrefer avec une série d'aimants semi-enterrés 2a respective.

La disposition des aimants semi-enterrés peut être choisie pour établir un champ magnétique augmenté du côté destiné à être tourné vers le stator associé en vis-à-vis, tandis que le champ magnétique est diminué ou annulé sur son côté opposé. On réduit ainsi la déperdition du champ magnétique.

Le rotor 1 comprend un arbre de rotation 7 qui s'étend perpendiculairement aux faces circulaires du rotor 1 en traversant les deux stators. Le rotor 1 est porté par au moins deux roulements 11, 11', avec un roulement 11, 11' associé à un stator respectif pour permettre sa rotation par rapport aux stators. Dans le mode de réalisation non limitatif des figures 7a et 7b, la périphérie externe du rotor 1 est entourée d'une frette 4.

Chaque stator comporte un circuit magnétique 9, 9' associé à un bobinage 10, 10'. Une carcasse 12, 12' permet de protéger le moteur électromagnétique.

L'invention n'est nullement limitée aux modes de réalisation décrits et illustrés qui n'ont été donnés qu'à titre d'exemples.

## Revendications

1. Rotor (1) destiné à un moteur ou une génératrice électromagnétique à flux axial, le rotor (1) comportant un corps (2) avec un disque présentant deux faces circulaires reliées par une épaisseur, le disque étant délimité entre une périphérie externe et une périphérie interne, la périphérie interne délimitant un évidement pour un arbre de rotation (7), au moins deux aimants (2a) permanents étant appliqués contre au moins une des deux faces circulaires du corps (2) dite face de support en étant chacun maintenus sur ladite face, un intervalle étant laissé entre lesdits au moins deux aimants (2a), lesdits au moins deux aimants (2a) sont des aimants semi-enterrés dans un logement respectif du disque en dépassant de leur logement respectif, **caractérisé en ce que** le rotor comporte au moins un moyen de maintien axial (3) étant logé dans chaque intervalle et comprenant au moins un tenon (3a) recouvrant localement et directement au moins un desdits au moins deux aimants semi-enterrés (2a).

2. Rotor selon la revendication précédente, dans lequel ledit au moins un moyen de maintien axial (3, 3a) fait partie intégrante du corps (2) du rotor (1) ou est une pièce rapportée solidaire du corps du rotor (1), se logeant dans un évidement pratiqué dans le corps (2).

3. Rotor (1) selon la revendication précédente, dans lequel ledit au moins un moyen de maintien axial (3, 3a) est usiné dans la masse du corps (2) du rotor (1) ou collé, soudé, vissé ou serti au corps (2) du rotor (1).

4. Rotor (1) selon l'une quelconque des deux revendications précédentes, dans lequel ledit au moins un moyen de maintien axial (3, 3a) comprend une ou des branches (3), la ou chaque branche (3) étant solidarisée avec le corps (2) et séparant lesdits au moins deux aimants semi-enterrés (2a) dans un intervalle respectif, la ou chaque branche (3) comprenant au moins un tenon (3a) s'étendant en saillie ortho-radiale de la branche (3) et recouvrant au moins une portion d'une face d'au moins un desdits au moins deux aimants semi-enterrés (2a) se trouvant la plus éloignée de et opposée à la face de support du corps (2), ledit au moins un tenon (3a) faisant butée contre l'aimant (2a) en empêchant un mouvement d'éloignement de l'aimant (2a) en direction axiale du corps (2).

5. Rotor (1) selon la revendication précédente, dans lequel chacun desdits au moins deux aimants semi-enterrés est associé à au moins deux tenons (3a).

6. Rotor (1) selon l'une quelconque des deux revendications précédentes, dans lequel chaque tenon (3a) s'étend latéralement des deux côtés de la branche (3) associée, une première portion latérale du tenon (3a) recouvrant au moins une portion d'un aimant desdits au moins deux aimants semi-enterrés (2a) et une seconde portion latérale du tenon (3a) recouvrant au moins une portion de l'autre aimant.

7. Rotor (1) selon l'une quelconque des trois revendications précédentes, dans lequel au moins un moyen de maintien axial auxiliaire (5a, 6a) s'étend circulairement tout autour de la périphérie interne et/ou externe du corps en formant une couronne monopièce recouvrant localement et directement au moins un desdits au moins deux aimants semi-enterrés (2a).

8. Rotor selon la revendication précédente, dans lequel ledit au moins un moyen de maintien axial auxiliaire (5a, 6a) est associé à au moins un moyen de maintien radial (5, 6) en étant solidarisé au corps (2).

9. Rotor selon la revendication précédente, dans lequel, ledit au moins un moyen de maintien axial auxiliaire (5a, 6a) est sous forme d'une collerette autour de la périphérie de la couronne, la collerette présentant des portions biseautées en vis-à-vis desdits au moins deux aimants semi-enterrés (2a).

10. Rotor (1) selon l'une quelconque des deux revendications précédentes, dans lequel ledit au moins un moyen de maintien radial (5, 6) est un moyen de maintien radial externe (6) sous forme de couronne s'étendant tout autour de la périphérie externe du corps (2), le moyen de maintien radial externe (6) étant relié respectivement à chaque branche (3), des portions (6a) en arc de cercle du moyen de maintien radial externe (6) formant butée contre un déplacement radial et axial d'un desdits au moins deux aimants semi-enterrés (2a).

11. Rotor (1) selon l'une quelconque des trois revendications précédentes, dans lequel le corps (2) comprend un moyen de maintien radial interne (5a) et/ou externe (6a), le moyen de maintien radial interne (5a) et/ou externe (6a) étant solidarisé avec la ou chaque branche (3).

12. Rotor (1) selon l'une quelconque des revendications précédentes 1 à 7, dans lequel le rotor (1) est entouré par une frette (4) circulaire.

13. Rotor (1) selon l'une quelconque des revendications précédentes, dans lequel lesdits au moins deux aimants semi-enterrés sont de forme différente et/ou composés de plusieurs pièces formant des pôles magnétiques ou font partie d'une structure monopièce présentant plusieurs pôles magnétiques.

14. Rotor (1) selon l'une quelconque des revendications précédentes, dans lequel lesdits au moins deux aimants semi-enterrés (2a) sont sous la forme de tuiles quadrangulaires avec deux côtés desdits au moins deux aimants semi-enterrés (2a) s'étendant radialement et deux côtés interne et externe desdits au moins deux aimants semi-enterrés (2a) s'étendant en arcs de cercle concentriques au centre du disque formé par le corps (2).

15. Rotor (1) selon l'une quelconque des revendications précédentes, dans lequel les deux faces circulaires du corps (2) du rotor (1) comprennent chacune au moins deux aimants semi-enterrés (2a).

16. Rotor (1) selon l'une quelconque des revendications précédentes, dans lequel lesdits au moins deux aimants semi-enterrés (2a) font partie d'une structure monopièce présentant plusieurs pôles magnétiques, et dans lequel deux structures monopièces formant deux couronnes circulaires concentriques d'aimants semi-enterrés dont une sur chacune des deux faces circulaires du corps (2), les deux structures monopièces étant espacées par un élément de séparation faisant partie du corps (2) du rotor (1), lesdits au moins deux aimants semi-enterrés (2a) des deux structures monopièces en forme de couronnes étant maintenus par le moyen latéral de maintien axial (3, 3a).

## Patentansprüche

1. Rotor (1), der für einen elektromagnetischen Axialflussmotor oder -generator bestimmt ist, wobei der Rotor (1) einen Körper (2) mit einer Scheibe beinhaltet die zwei kreisförmige Seiten aufweist, die durch eine Dicke verbunden sind, wobei die Scheibe zwischen einem äußeren Umfang und einem inneren Umfang begrenzt ist, wobei der innere Umfang eine Aussparung für eine Drehwelle (7) begrenzt, wobei mindestens zwei Dauermagneten (2a) an mindestens eine der beiden kreisförmigen Seiten des Körpers (2), Trägerseite genannt, angelegt sind, wobei jeder an der Seite gehalten wird, wobei ein Intervall zwischen den mindestens zwei Magneten (2a) freigelassen wird, die mindestens zwei Magneten (2a) halbeingebettete Magneten in einer jeweiligen Aufnahme der Scheibe sind, indem sie aus ihrer jeweiligen Aufnahme hervorstehen, **dadurch gekennzeichnet, dass** der Rotor mindestens ein axiales Haltemittel (3) beinhaltet, welches in jedem Intervall aufgenommen ist, und mindestens einen Zapfen (3a) umfasst, der mindestens einen der mindestens zwei halbeingebetteten Magneten (2a) lokal und direkt abdeckt.

2. Rotor nach dem vorstehenden Anspruch, wobei das mindestens eine axiale Haltemittel (3, 3a) integraler Bestandteil des Körpers (2) des Rotors (1) ist, oder ein beigebrachtes Teil ist, das fest mit dem Körper des Rotors (1) verbunden ist, und in einer Aussparung aufgenommen ist, die in den Körper (2) eingearbeitet ist.

3. Rotor (1) nach dem vorstehenden Anspruch, wobei das mindestens eine axiale Haltemittel (3, 3a) in der Masse des Körpers (2) des Rotors (1) bearbeitet, oder an den Körper (2) des Rotors (1) geklebt, geschweißt, geschraubt oder gecrimpt ist.

4. Rotor (1) nach einem der beiden vorstehenden Ansprüche, wobei das mindestens eine axiale Haltemittel (3, 3a) einen oder mehrere Äste (3) umfasst, wobei der oder jeder Ast (3) fest mit dem Körper (2) verbunden ist, und die mindestens zwei halbeingebetteten Magneten (2a) in einem jeweiligen Intervall trennt, wobei der oder jeder Ast (3) mindestens einen Zapfen (3a) umfasst, der sich orthoradial aus dem Ast (3) hervorstehend erstreckt, und mindestens einen Abschnitt einer Seite mindestens eines der mindestens zwei halbeingebetteten Magneten (2a) abdeckt, der sich am weitesten entfernt, und gegenüber der Trägerseite des Körpers (2) befindet, wobei der mindestens eine Zapfen (3a) einen Anschlag für den Magneten (2a) bildet, indem er eine Entfernungsbewegung des Magneten (2a) in axialer Richtung des Körpers (2) verhindert.

5. Rotor (1) nach dem vorstehenden Anspruch, wobei jeder der mindestens zwei halbeingebetteten Magneten mindestens zwei Zapfen (3a) zugeordnet ist.

6. Rotor (1) nach einem der beiden vorstehenden Ansprüche, wobei sich jeder Zapfen (3a) seitlich der beiden Seiten des zugeordneten Astes (3) erstreckt, wobei ein erster seitlicher Abschnitt des Zapfens (3a) mindestens einen Abschnitt eines Magneten der mindestens zwei halbeingebetteten Magneten (2a) abdeckt, ein zweiter seitlicher Abschnitt des Zapfens (3a) mindestens einen Abschnitt des anderen Magneten abdeckt.

7. Rotor (1) nach einem der drei vorstehenden Ansprüche, wobei sich mindestens ein axiales Hilfshaltemittel (5a, 6a) kreisförmig ganz um den inneren und/oder äußeren Umfang des Körpers erstreckt, indem es einen einstückigen Kranz bildet, der mindestens einen der mindestens zwei halbeingebetteten Magneten (2a) lokal und direkt abdeckt.

8. Rotor nach dem vorstehenden Anspruch, wobei das mindestens eine axiale Hilfshaltemittel (5a, 6a) mindestens einem radialen Haltemittel (5, 6) zugeordnet ist, und dabei fest mit dem Körper (2) verbunden ist.

9. Rotor nach dem vorstehenden Anspruch, wobei das mindestens eine axiale Hilfshaltemittel (5a, 6a) in Form eines Kragens um den Umfang des Kranzes herum ist, wobei der Kragen abgekantete Abschnitte gegenüber den mindestens zwei halbeingebetteten Magneten (2a) aufweist.

10. Rotor (1) nach einem der beiden vorstehenden Ansprüche, wobei das mindestens eine radiale Haltemittel (5, 6) ein äußeres radiales Haltemittel (6) in Form eines Kranzes ist, der sich ganz um den äußeren Umfang des Körpers (2) herum erstreckt, wobei das äußere radiale Haltemittel (6) jeweils mit jedem Ast (3) verbunden ist, Abschnitte (6a) im Kreisbogen des äußeren radialen Haltemittels (6) einen Anschlag gegen eine radiale und axiale Verschiebung eines der mindestens zwei halbeingebetteten Magneten (2a) bilden.

11. Rotor (1) nach einem der drei vorstehenden Ansprüche, wobei der Körper (2) ein inneres (5a) und/oder äußeres (6a) radiales Haltemittel umfasst, wobei das innere (5a) und/oder äußere (6a) radiale Haltemittel fest mit dem oder jedem Ast (3) verbunden ist.

12. Rotor (1) nach einem der vorstehenden Ansprüche 1 bis 7, wobei der Rotor (1) von einem kreisförmigen Bund (4) umgeben ist.

13. Rotor (1) nach einem der vorstehenden Ansprüche, wobei die mindestens zwei halbeingebetteten Magneten von unterschiedlicher Form sind und/oder sich aus mehreren Stücken zusammensetzen, die Magnetpole bilden oder Teil einer einstückigen Struktur sind, die mehrere Magnetpole aufweist.

14. Rotor (1) nach einem der vorstehenden Ansprüche, wobei die mindestens zwei halbeingebetteten Magneten (2a) in der Form von viereckigen Fliesen sind, mit zwei Seiten der mindestens zwei halbeingebetteten Magneten (2a), die sich radial erstrecken, und zwei inneren und äußeren Seiten der mindestens zwei halbeingebetteten Magneten (2a), die sich als Kreisbogen konzentrisch zur Mitte der durch den Körper (2) gebildeten Scheibe erstrecken.

15. Rotor (1) nach einem der vorstehenden Ansprüche, wobei die beiden kreisförmigen Seiten des Körpers (2) des Rotors (1) jeweils mindestens zwei halbeingebettete Magneten (2a) umfassen.

16. Rotor (1) nach einem der vorstehenden Ansprüche, wobei die mindestens zwei halbeingebetteten Magneten (2a) Teil einer einstückigen Struktur sind, die mehrere Magnetpole aufweist und in der zwei einstückige Strukturen zwei konzentrische kreisförmige Kränze halbeingebetteter Magneten bilden, davon einer auf jeder der beiden kreisförmigen Seiten des Körpers (2), wobei die beiden einstückigen Strukturen durch ein Trennelement, das Teil des Körpers (2) des Rotors (1) ist, beabstandet sind, wobei die mindestens zwei halbeingebetteten Magneten (2a) der beiden einstückigen Strukturen in Form von Kränzen durch das seitliche axiale Haltemittel (3, 3a) gehalten werden.

## Claims

1. Rotor (1) intended for an axial-flux electromagnetic motor or generator, the rotor (1) including a body (2) with a disc having two circular faces connected by a thickness, the disc being delimited between an outer periphery and an inner periphery, the inner periphery delimiting a recess for a rotation shaft (7), at least two permanent magnets (2a) being applied against at least one of the two circular faces of the body (2) referred to as the support face while each being held on said face, a gap being left between said at least two magnets (2a), said at least two magnets (2a) are magnets semi-embedded in a respective housing in the disc, projecting from their respective housing, **characterised in that** the rotor includes at least one axial holding means (3) being housed in each gap and comprising at least one tenon (3a) locally and directly covering at least one of said at least two semi-embedded magnets (2a).

2. Rotor according to the preceding claim, wherein said at least one axial holding means (3, 3a) forms an integral part of the body (2) of the rotor (1) or is an attached piece secured to the body of the rotor (1), housed in a recess formed in the body (2).

3. Rotor (1) according to the preceding claim, wherein said at least one axial holding means (3, 3a) is machined in the mass of the body (2) of the rotor (1) or glued, welded, screwed or crimped to the body (2) of the rotor (1).

4. Rotor (1) according to either one of the preceding two claims, wherein said at least one axial holding means (3, 3a) comprises one or more arms (3), the or each arm (3) being secured to the body (2) and separating said at least two semi-embedded magnets (2a) in a respective gap, the or each arm (3) comprising at least one tenon (3a) extending so as to project orthoradially from the arm (3) and covering at least a portion of a face of at least one of said at least two semi-embedded magnets (2a) situated furthest away from and opposite the support face of the body (2), said at least one tenon (3a) forming a stop against the magnet (2a) while preventing a distancing movement of the magnet (2a) in the axial direction of the body (2).

5. Rotor (1) according to the preceding claim, wherein each of said at least two semi-embedded magnets is associated with at least two tenons (3a).

6. Rotor (1) according to either one of the preceding two claims, wherein each tenon (3a) extends laterally from the two sides of the associated arm (3), a first lateral portion of the tenon (3a) covering at least a portion of a magnet of said at least two semi-embedded magnets (2a) and a second lateral portion of the tenon (3a) covering at least a portion of the other magnet.

7. Rotor (1) according to any one of the preceding three claims, wherein at least one auxiliary axial holding means (5a, 6a) extends circularly all around the inner and/or outer periphery of the body while forming a single-piece ring locally and directly covering at least one of said at least two semi-embedded magnets (2a).

8. Rotor according to the preceding claim, wherein said at least one auxiliary axial holding means (5a, 6a) is associated with at least one radial holding means (5, 6) while being secured to the body (2).

9. Rotor according to the preceding claim, wherein said at least one auxiliary axial holding means (5a, 6a) is in the form of a collar around the periphery of the ring, the collar having bevelled portions facing said at least two semi-embedded magnets (2a).

10. Rotor (1) according to either one of the preceding two claims, wherein said at least one radial holding means (5, 6) is an external radial holding means (6) in the form of a ring extending all around the outer periphery of the body (2), the external radial holding means (6) being connected respectively to each arm (3), portions (6a) in an arc of a circle of the external radial holding means (6) forming a stop counter to a radial and axial movement of one of said at least two semi-embedded magnets (2a).

11. Rotor (1) according to any one of the preceding three claims, wherein the body (2) comprises an internal (5a) and/or external (6a) radial holding means, the internal (5a) and/or external (6a) radial holding means being secured to the or each arm (3).

12. Rotor (1) according to any one of the preceding claims 1 to 7, wherein the rotor (1) is surrounded by a circular hoop (4).

13. Rotor (1) according to any one of the preceding claims, wherein said at least two semi-embedded magnets have different forms and/or are composed of a plurality of pieces forming magnetic poles or form part of a single-piece structure having a plurality of magnetic poles.

14. Rotor (1) according to any one of the preceding claims, wherein said at least two semi-embedded magnets (2a) are in the form of quadrangular tiles with two sides of said at least two semi-embedded magnets (2a) extending radially and two inner and outer sides of said at least two semi-embedded magnets (2a) extending in concentric arcs of a circle at the centre of the disc formed by the body (2).

15. Rotor (1) according to any one of the preceding claims, wherein the two circular faces of the body (2) of the rotor (1) each comprise at least two semi-embedded magnets (2a).

16. Rotor (1) according to any one of the preceding claims, wherein said at least two semi-embedded magnets (2a) form part of a single-piece structure having a plurality of magnetic poles and wherein two single-piece structures forming two concentric circular rings of semi-embedded magnets including one on each of the two circular faces of the body (2), the two single-piece structures being spaced apart by a separation element forming part of the body (2) of the rotor (1), said at least two semi-embedded magnets (2a) of the two single-piece structures in the form of rings being held by the lateral axial-holding means (3, 3a).
